# EUROPÄISCHE PATENTSCHRIFT

(11) **EP 3 808 951 B1**
(45) Veröffentlichungstag und Bekanntmachung des Hinweises auf die Patenterteilung: **12.03.2025**
(21) Anmeldenummer: 20201013.8
(22) Anmeldetag: 09.10.2020
(51) Int. Cl.: F02B 21/00, F02B 19/00, F02B 19/10, F02B 37/04, F02B 39/10, F02M 26/06

(54) **AUFGELADENER OTTOMOTOR MIT EINER AKTIVEN VORKAMMER MIT EINER LUFTENTNAHME NACH DEM TURBOLADER**
SUPERCHARGED PETROL ENGINE WITH AN ACTIVE PRECHAMBER WITH AN AIR OUTLET AFTER THE TURBOCHARGER
MOTEUR À ESSENCE SURALIMENTÉ AVEC UNE PRÉCHAMBRE ACTIVE AVEC UN PRÉLÈVEMENT D'AIR EN AVAL DU TURBOCOMPRESSEUR

(30) Priorität: 17.10.2019 DE 102019128111
(43) Veröffentlichungstag der Anmeldung: 21.04.2021
(73) Patentinhaber: VOLKSWAGEN AG, 38440 Wolfsburg (DE)
(72) Erfinder: MICHELS, Karsten, 39130 Magdeburg (DE); HAGELSTEIN, Dirk, Dr., 38110 Braunschweig (DE)
(74) Vertreter: Gulde & Partner

(56) Entgegenhaltungen:
- WO-A1-2014/114846
- AT-U1- 13 417
- DE-A1- 102015 004 741

## Beschreibung

Die Erfindung betrifft eine Brennkraftmaschine, umfassend mindestens einen Zylinder, wobei der mindestens eine Zylinder eine Hauptbrennkammer zur Verbrennung eines Kraftstoff/Luft-Gemischs oder eines Kraftstoff/Luft/Abgas-Gemischs und eine mit der Hauptbrennkammer über mindestens einen Überströmkanal fluidseitig verbundene gespülte Vorkammer und eine Abgasturbolader aufweist.

Die Druckschrift WO 2014/114846A1 beschreibt ein Verfahren zum Betreiben eines Mehrzylinderkolbenmotors. Vorgesehen ist, dass in dem Motor jeder Zylinder mit einem Hubkolben und einer Vorverbrennungskammer versehen ist und das Verfahren die Schritte des Einführens von gasförmigem Kraftstoff in einen Ansaugkanal des Motors, Einspritzen von flüssigem Pilotkraftstoff in die Vorverbrennungskammer, Zünden des flüssigen Pilotkraftstoffs mittels Verdichtung durch den Kolben und Nutzen der Verbrennung des flüssigen Pilotkraftstoffs, um den gasförmigen Kraftstoff zu entzünden, aufweist, wobei das Abgas vor dem Einspritzen des flüssigen Pilotkraftstoffs in die Vorverbrennungskammer eingeführt wird. Bei diesem Verfahren wird das Abgas abgekühlt, bevor es in die Vorverbrennungskammer eingeführt wird, und die Ansaugluft wird mit dem Abgas vor dem Einführen der Mischung aus dem Abgas und der Ansaugluft in die Vorverbrennungskammer gemischt.

Ein weiterer Ottomotor und ein zugehöriges Verfahren der gattungsgemäßen Art zur Versorgung einer Hauptbrennkammer mit verdichteter Verbrennungsluft und einer Vorkammer mit einem Kraftstoff/Luft-Gemisch ist aus der Druckschrift DE 10 2016 112 537 A1 bekannt. Vorgesehen ist hier, dass der Ottomotor mindestens einen Zylinder umfasst, wobei der mindestens eine Zylinder eine Hauptbrennkammer zur Verbrennung eines Brenngas-Luft-Gemischs und eine mit der Hauptbrennkammer über einen Überströmkanal gekoppelte, gespülte Vorkammer umfasst. Der Ottomotor umfasst ferner mindestens einen Abgasturbolader, der eine Turbine zur Entspannung von den mindestens einen Zylinder verlassendem Abgas und einen Verdichter zur Verdichtung von den mindestens einen Zylinder zuzuführender Luft, wobei mehrere Luftpfade für die den mindestens einen Zylinder zuzuführende Luft vorhanden sind, wobei über einen ersten Luftpfad mit einem ersten Verdichter zumindest Luft verdichtbar und der Hauptbrennkammer des mindestens einen Zylinders zuführbar ist, und wobei über einen zweiten Luftpfad mit einem zweiten Verdichter ein Brenngas-Luft-Gemisch verdichtbar und der Vorkammer des mindestens einen jeden Zylinders zuführbar ist.

Zum Stand der Technik gehören zudem die Druckschriften AT 13 417 U1 und DE 10 2015 004 741 A1.

Der Erfindung liegt die Aufgabe zugrunde, einen neuartigen gattungsgemäßen Ottomotor und ein neues Verfahren zum Betreiben des Ottomotors zu schaffen.

Diese Aufgabe wird durch eine ottomotorische Brennkraftmaschine und ein zugehöriges Verfahren zum Betrieb der Brennkraftmaschine gelöst.

Die erfindungsgemäße Brennkraftmaschine umfasst
- mindestens einen Zylinder, wobei der mindestens eine Zylinder eine Hauptbrennkammer zur Verbrennung eines Kraftstoff/Luft-Gemischs oder eines Kraftstoff/Luft/Abgas-Gemischs und eine mit der Hauptbrennkammer über mindestens einen Überströmkanal fluidseitig verbundene gespülte Vorkammer aufweist, und
- mindestens einen Abgasturbolader, der eine Turbine zur Entspannung von dem mindestens einen Zylinder verlassenden Abgas und einen Verdichter zur Verdichtung von dem mindestens einen Zylinder zuzuführender Frischluft oder eines Frischluft/Abgas-Gemischs als verdichtete Ladeluft aufweist,
- wobei in einem Ladeluftstrang stromab des Verdichters eine Entnahmestelle ausgebildet ist, von der ein Spülstrang abzweigt, über den eine Ladeluftteilmenge der verdichteten Ladeluft zur Spülung der mindestens einen Vorkammer entnehmbar ist, wobei in dem Spülstrang ein Zusatzverdichter angeordnet ist, der den Ladedruck der verdichteten Ladeluft bedarfsabhängig erhöht,
- wobei dem Verdichter aus einem stromauf des Verdichters angeordneten Frischluftstrang das Frischluft/Abgas-Gemisch zuführbar ist, da der Frischluftstrang stromauf des Verdichters mit einem Abgasrückführungsstrang eines Abgasstrangs verbunden ist, so dass der Frischluft im Frischluftstrang Abgas zuführbar ist, so dass über die Entnahmestelle auch ein Frischluft/Abgas-Gemisch als verdichtete Ladeluft entnehmbar und im Spülstrang mittels des Zusatzverdichters bedarfsabhängig nachverdichtbar ist,
- wobei im Spülstrang stromab des Zusatzverdichters eine Zuführstelle einer Kraftstoffzuleitung zur Zuführung von Kraftstoff zu der mittels des Zusatzverdichters bedarfsabhängig nachverdichteten Ladeluft ausgebildet ist, die im Spülstrang als Frischluft oder als Frischluft/Abgas-Gemisch vorliegt.

Bevorzugt ist vorgesehen, dass in dem Ladeluftstrang stromab des Verdichters vor der Entnahmestelle ein erster Ladeluftkühler angeordnet ist.

Die Entnahmestelle ist bevorzugt zwischen dem ersten Ladeluftkühler und einer Drosselklappe eines zu der mindestens einen Hauptbrennkammer führenden Saugrohrs angeordnet.

Vorgesehen ist ferner bevorzugt, dass stromauf des Zusatzverdichters im Spülstrang ein Rückschlagventil oder ein Rückschlagventil und ein Pufferbehälter angeordnet ist/sind.

Das erfindungsgemäße Verfahren zum Betreiben einer Brennkraftmaschine zeichnet sich dadurch aus, dass die Brennkraftmaschine mindestens einen Zylinder umfasst, wobei der mindestens eine Zylinder eine Hauptbrennkammer zur Verbrennung eines Kraftstoff/Luft-Gemischs oder eines Kraftstoff/Luft/Abgas-Gemischs und eine mit der Hauptbrennkammer über mindestens einen Überströmkanal fluidseitig verbundene gespülte Vorkammer aufweist, wobei die Brennkraftmaschine ferner mindestens einen Abgasturbolader umfasst, der eine Turbine zur Entspannung von dem mindestens einen Zylinder verlassenden Abgas und einen Verdichter zur Verdichtung von dem mindestens einen Zylinder zuzuführender Frischluft oder eines Frischluft/Abgas-Gemischs als verdichtete Ladeluft aufweist, wobei sich das Verfahren erfindungsgemäß dadurch auszeichnet, dass in einem Ladeluftstrang stromab des Verdichters eine Entnahmestelle ausgebildet ist, von der ein Spülstrang abzweigt, über den eine Ladeluftteilmenge der im Verdichter des Abgasturboladers verdichteten Ladeluft zur Spülung der mindestens einen Vorkammer entnommen wird, wobei in dem Spülstrang stromab eines Zusatzverdichters eine Zuführstelle einer Kraftstoffzuleitung zur Zuführung von Kraftstoff zu der mittels des Zusatzverdichters bedarfsabhängig nachverdichteten Ladeluft angeordnet ist, der den Ladedruck der verdichteten Ladeluft bedarfsabhängig erhöht, so dass die mindestens eine Vorkammer mit der nachverdichteten Frischluft oder dem nachverdichteten Frischluft/Abgas-Gemisch gespült wird, da ein Frischluftstrang stromauf des Verdichters mit einem Abgasrückführungsstrang eines Abgasstrangs verbunden ist, so dass der Frischluft im Frischluftstrang Abgas zuführbar ist, wobei durch den strukturellen Aufbau der Brennkraftmaschine ermöglicht wird, dass der verdichteten Ladeluft, insbesondere der Frischluft oder dem Frischluft/Abgas-Gemisch stromab des Zusatzverdichters, bedarfsabhängig Kraftstoff zugeführt wird, so dass die mindestens eine Vorkammer auch mit nachverdichtetem Kraftstoff/Frischluft-Gemisch oder nachverdichtetem Kraftstoff/Luft/Abgas-Gemisch gespült werden kann.

Die Erfindung wird nachfolgend anhand der zugehörigen Zeichnung erläutert. Es zeigt:

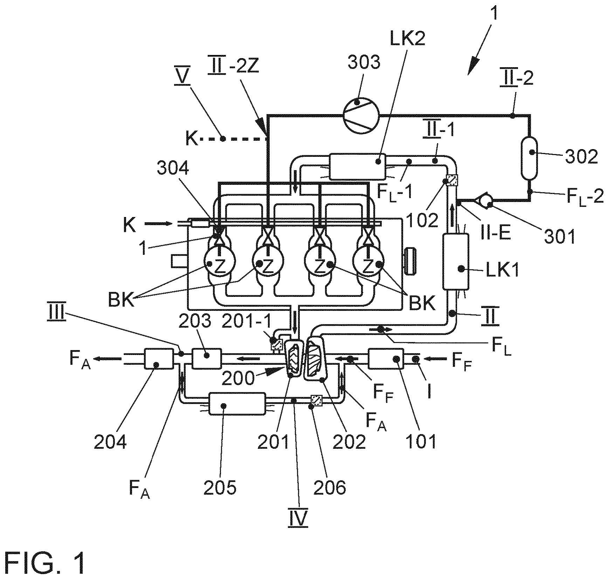

- Figur 1: eine schematische Darstellung einer Brennkraftmaschine, insbesondere eines erfindungsgemäßen Ottomotors mit einer Luftversorgung einer aktiven Vorkammer für aufgeladene Ottomotoren mit einer Luftentnahme nach einem Abgasturbolader.

Die hier vorliegende Erfindung betrifft eine ottomotorische Brennkraftmaschine, insbesondere einen mit einem Gas oder einem flüssigen Kraftstoff betriebenen Ottomotor, sowie ein Verfahren zum Betreiben eines solchen Ottomotors.

Figur 1 zeigt ein Schema des erfindungsgemäßen Ottomotors 1, der mehrere Zylinder Z umfasst. Jeder der Zylinder Z verfügt über eine Hauptbrennkammer BK sowie eine Vorkammer (nicht explizit dargestellt), wobei die jeweilige Vorkammer mit der Hauptbrennkammer BK des jeweiligen Zylinders Z über mindestens einen Überströmkanal (nicht dargestellt) gekoppelt ist.

In den Zylindern Z des Ottomotors 1, nämlich im Bereich der Hauptbrennkammern BK der Zylinder Z, wird ein Gemisch aus Brenngas und Luft verbrannt, wobei hierbei entstehendes Abgas F_{A} über einen Abgasturbolader 200, insbesondere über eine Turbine 201 des Abgasturboladers 200 und im Ausführungsbeispiel in einem Abgasstrang III über Katalysatoren, insbesondere über einen Vor-Katalysator 203 und einen Haupt-Katalysator 204, abgeführt wird. Hierbei im Bereich der Turbine 201 des Abgasturboladers 200 gewonnene Energie wird zum Verdichten von Verbrennungsluft/Frischluft F_{F} in einem Verdichter 202 genutzt, die dann als verdichtete Verbrennungsluft F_{L} beziehungsweise Ladeluft in einem Ladeluftstrang II den Zylindern Z des Ottomotors 1 zugeführt wird.

Im dargestellten Ausführungsbeispiel ist die einfachste Form der Ladedruckregelung mittels eines turbinenseitigen Bypasses mit Laderegeldruckklappe 201-1 dargestellt.

Im Ausführungsbeispiel handelt es sich um einen Ottomotor 1 mit fremdgezündeter innerer Gemischbildung, das heißt, das Kraftstoff/Luft-Gemisch wird durch Direkteinspritzung von flüssigem Kraftstoff oder Einblasung von gasförmigem Kraftstoff über Einspritz-/Einblasventile (nicht dargestellt) in der Hauptbrennkammer BK gebildet und mittels einer Zündeinrichtung (nicht dargestellt) gezündet. Das beschriebene Verfahren kann aber auch bei äußerer Gemischbildung analog eingesetzt werden. Das heißt, die Darstellung und die nachfolgende Beschreibung erfolgt anhand einer von mehreren Ausführungsformen der Gemischbildung.

Stromauf der Turbine 201 ist im Ausführungsbeispiel ein Abgasrückführungsstrang IV ausgebildet, der in üblicher Weise einen Abgasrückführungs-Kühler 205 und eine Abgasrückführungs-Klappe 206 umfasst, wobei das Abgas F_{A} stromab eines Luftfilters 101 des Frischluftstrangs I stromauf des Verdichters 202 in den Frischluftstrang I eingebunden ist.

Der erfindungsgemäße Ottomotor 1 verfügt erfindungsgemäß über zwei Teil-Ladeluftstränge II-1 und II-2, über die Ladeluft F_{L}-1 und F_{L}-2 zu den Hauptbrennkammern BK und den Vorkammern geliefert wird, vergleiche Figur 1, die stromab des Verdichters 202 ausgehend von dem gemeinsamen Ladeluftstrang II ausgebildet sind, worauf nachfolgend eingegangen wird.

Der erste Teil-Ladeluftstrang II-1 liefert ausgehend von dem gemeinsamen Ladeluftstrang II verdichtete Ladeluft F_{L}-1 vom Verdichter 202 zu den Hauptbrennkammern BK der jeweiligen Zylinder Z.

Der zweite Teil-Ladeluftstrang II-2 liefert ausgehend von dem gemeinsamen Ladeluftstrang II verdichtete Ladeluft F_{L}-2 vom Verdichter 202 zu den Vorkammern der jeweiligen Zylinder Z.

Mit anderen Worten, der Ladeluftstrang II weist eine Entnahmestelle II-E (stromauf der Drosselklappe 102) auf, an der verdichtete Ladeluft F_{L} mit dem vor der Drosselklappe 102 anliegenden Ladedruck als Spülluft für die Vorkammern der jeweiligen Zylinder Z entnommen wird, weshalb der zweite Teil-Ladeluftstrang II-2 den Spülstrang für die Vorkammern und den Teil-Ladeluftstrang II-1 für die Hauptbrennkammern BK bildet.

Dem Spülstrang ist hinter der Entnahmestelle II-E ein Rückschlagventil 301, bevorzugt ein Pufferbehälter 302 und ein Zusatzverdichter 303 sowie nach entsprechender Aufteilung des Spülstrangs in einzelne Spülluftleitungen je Zylinder Z Taktventile 304 zugordnet, über die zu vorgebbaren Zeitpunkten eine vorgebbare Menge Spülluft über den Spülstrang zu den Vorkammern der jeweiligen Zylinder Z geführt wird.

Weiter erfindungsgemäß ist vorgesehen, dass nicht nur Spülluft, sondern alternativ ein Luft-Kraftstoffdampf-Gemisch zur Spülung der Vorkammern der jeweiligen Zylinder Z vorgesehen ist, so dass der zweite Teil-Ladeluftstrang II-2, der auch als Spülstrang bezeichnet wird, über eine Kraftstoffzuleitung V Kraftstoff K an einer Zuführstelle II-2Z zu dem Spülstrang verfügt, die stromab des Zusatzverdichters 303 noch vor Aufteilung des Spülstrangs in die einzelnen Spülluftleitungen vor den Taktventilen 304 angeordnet ist.

Liegt ein Luft-Kraftstoffdampf-Gemisch F_{L}-2/K vor, kann entsprechend zu vorgebbaren Zeitpunkten eine vorgebbare Menge Luft-Kraftstoffdampf-Gemisch F_{L}-2/K als Spülmedium über den Spülstrang zu den Vorkammern der jeweiligen Zylinder Z geführt werden.

Erfindungsgemäß wird für die Spülung der aktiven Vorkammern mit Ladeluft F_{L}-2 oder auch mit dem Ladeluft-Kraftstoffgemisch F_{L}-2/K für das einzublasende Spülmedium ein Druckniveau über dem Ladeluftdruck der Ladeluft F_{L}-1 benötigt.

Es wird deshalb vorgeschlagen, dass der erfindungsgemäß angeordnete Zusatzverdichter 303 das Druckniveau der Ladeluft F_{L} im Spülstrang auf einen vorgebbaren Spülluftdruck erhöht, der bevorzugt bis zum Zweifachen des Druckes der Ladeluft F_{L} beträgt.

Mit anderen Worten, der mittels des Zusatzverdichters 303 erzeugte Spüldruck liegt stets oberhalb des in der Vorkammer anliegenden Drucks. Es wird mittels des Zusatzverdichters 303 ein bedarfsabhängiger Druck erzeugt, dessen Druckniveau oberhalb des Vorkammerdrucks liegt, so dass bei einem Öffnen des jeweiligen Taktventiles 304 stets eine sichere Spülung der Vorkammern 13 in Richtung Hauptbrennkammer BK gewährleistet ist. Der Druck stromabwärts des Zusatzverdichters 303 ist somit stets größer als der Druck des Verdichters 202 des Abgasturboladers 200. Die Verdichter 202 und 303 werden entsprechend konfiguriert und gemäß den Erläuterungen betrieben.

In vorteilhafter Weise ist durch die Entnahme der Ladeluft F_{L} aus dem Ladeluftstrang II der Ausgangsdruck für den Zusatzverdichter 303 im aufgeladenen Betrieb oberhalb des Umgebungsdruckes, so dass Verdichtungsarbeit für den Zusatzverdichter 303 gespart wird. Mit anderen Worten, der Zusatzverdichter 303 erbringt seine Verdichtungsleistung in Form einer Druckerhöhung, die ausgehend von dem anliegenden Ladeluftdruck der Ladeluft F_{L} an der Entnahmestelle II-E von dem geforderten beziehungsweise vorgebbaren Spülluftdruck an den Taktventilen 304 abhängt.

Bevorzugt ist vorgesehen, dass die Entnahme der Ladeluft F_{L} nach einem Ladeluftkühler LK1 erfolgt. Im vorliegenden Ausführungsbeispiel ist im gemeinsamen Ladeluftstrang II ein erster Ladeluftkühler LK1 und im dem zu den Hauptbrennkammern BK führenden Teil-Ladeluftstrang II-1 hinter der Drosselklappe 102 ein weiterer Ladeluftkühler LK2 angeordnet.

In vorteilhafter Weise wird durch die Entnahme der Ladeluft F_{L} nach einem Ladeluftkühler LK1 zwar ein etwas geringerer Ausgangsdruck an der Entnahmestelle II-E anliegen, als vor dem Ladeluftkühler LK1, jedoch enthält die kühlere Spülluft nicht nur mehr Sauerstoff, sondern die kühlere Spülluft weist auch ein geringeres Volumen auf, wodurch einerseits in vorteilhafter Weise eine geringere Verdichtungsarbeit im Zusatzverdichter 303 geleistet werden muss, und andererseits in vorteilhafter Weise die Ladeluft oder das Ladeluft-Kraftstoffgemisch F_{L}-2/K zum Spülen der Vorkammern trotz der nachgelagerten Zusatzverdichtung mittels des Zusatzverdichters 303 aufgrund des an der Entnahmestelle II-E mehr zur Verfügung stehenden Sauerstoffs zündfreudiger ist.

In einer alternativen Ausgestaltung kann der Frischluft F_{F} im Frischluftstrang I über die Abgasrückführungs-Klappe 206 Abgas zugeführt werden, so dass der Frischluft F_{F} Abgas zugeführt werden kann.

In diesem Fall wird über den Ladeluftstrang II ein Frischluft/Abgas-Gemisch F_{F}/F_{A} in einem vorgebbaren Mischungsverhältnis geführt, welches zu den Hauptbrennkammern BK und zu den Vorkammern geführt und, wie zuvor erläutert, über den Verdichter 202 verdichtet und im Spülstrang zu den Vorkammern nachverdichtet wird, wobei dem Frischluft/Abgasgemisch F_{F}/F_{A} über die Kraftstoffzuleitung V an der Zuführstelle II-2Z eine vorgebbare Menge Kraftstoff K zuführbar ist, so dass schließlich auch ein mittels des Zusatzverdichters 303 nachverdichtetes Kraftstoff/Luft/Abgas-Gemisch K/F_{F}/F_{A} in die Vorkammern geleitet werden kann.

### Bezugszeichenliste

- 1: Brennkraftmaschine / Ottomotor
- 101: Luftfilter
- 102: Drosselklappe
- Z: Zylinder
- BK: Hauptbrennkammer
- 200: Abgasturbolader
- 201: Turbine
- 202: Verdichter
- 201-1: Laderegeldruckklappe
- 203: Vor-Katalysator
- 204: Haupt-Katalysator
- 205: Abgasrückführungs-Kühler
- 206: Abgasrückführungs-Klappe
- 301: Rückschlagventil
- 302: Pufferbehälter
- 303: Zusatzverdichter
- 304: Taktventile
- LK1: Ladeluftkühler
- LK2: Ladeluftkühler
- I: Frischluftstrang
- II: Ladeluftstrang
- II-E: Entnahmestelle
- II-1: erster Teil-Ladeluftstrang
- II-2: zweiter Teil-Ladeluftstrang (Spülstrang)
- II-2Z: Zuführstelle
- III: Abgasstrang
- IV: Abgasrückführungsstrang
- V: Kraftstoffzuleitung
- F_{F}: Frischluft/Verbrennungsluft
- F_{L}: Ladeluft vor Entnahmestelle II-E
- F_{L}-1: Ladeluft in II-1
- F_{L}-2: Ladeluft in II-2
- F_{L}-2/K: Ladeluft-Kraftstoffgemisch
- F_{A}: Abgas
- F_{F}/F_{A}: Frischluft/Abgas-Gemisch
- K: Kraftstoff
- K/F_{F}: Kraftstoff-Frischluft-Gemisch
- K/F_{F}/F_{A}: Kraftstoff/Luft/Abgas-Gemisch

## Patentansprüche

1. Brennkraftmaschine (1), umfassend mindestens einen Zylinder (Z), wobei der mindestens eine Zylinder (Z) eine Hauptbrennkammer (BK) zur Verbrennung eines Kraftstoff/Luft-Gemischs (K/F_{L}) oder eines Kraftstoff/Luft/Abgas-Gemischs (K/F_{F}/F_{A}) und eine mit der Hauptbrennkammer (BK) über mindestens einen Überströmkanal fluidseitig verbundene gespülte Vorkammer aufweist, und mindestens einen Abgasturbolader (200), der eine Turbine (201) zur Entspannung von dem mindestens einen Zylinder (Z) verlassenden Abgas (F_{A}) und einen Verdichter (202) zur Verdichtung von dem mindestens einen Zylinder (Z) zuzuführender Frischluft (F_{F}) oder eines Frischluft/Abgas-Gemischs (F_{F}/F_{A}) als verdichtete Ladeluft (F_{L}) aufweist, wobei in einem Ladeluftstrang (II) stromab des Verdichters (202) eine Entnahmestelle (II-E) ausgebildet ist, von der ein zweiter Teil-Ladeluftstrang (II-2) als Spülstrang und ein erster Teil-Ladeluftstrang (II-1) abzweigen, wobei über den Spülstrang eine Ladeluftteilmenge (F_{L}-2) der verdichteten Ladeluft (F_{L}) zur Spülung der mindestens einen Vorkammer entnehmbar ist, wobei in dem Spülstrang ein Zusatzverdichter (303) angeordnet ist, der den Ladedruck der verdichteten Ladeluft (F_{L}) bedarfsabhängig erhöht, wobei dem Verdichter (202) aus einem stromauf des Verdichters (202) angeordneten Frischluftstrang (I) das Frischluft/Abgas-Gemisch (F_{F}/F_{A}) zuführbar ist, da der Frischluftstrang (I) stromauf des Verdichters (202) mit einem Abgasrückführungsstrang (IV) eines Abgasstrangs (III) verbunden ist, so dass der Frischluft (F_{F}) im Frischluftstrang (I) Abgas (F_{A}) zuführbar ist, so dass über die Entnahmestelle (II-E) auch ein Frischluft/Abgas-Gemisch (F_{F}/F_{A}) als verdichtete Ladeluft (F_{L}) entnehmbar und im Spülstrang mittels des Zusatzverdichters (303) bedarfsabhängig nachverdichtbar ist, wobei im Spülstrang stromab des Zusatzverdichters (303) eine Zuführstelle (II-2Z) einer Kraftstoffzuleitung (V) zur Zuführung von Kraftstoff (K) zu der mittels des Zusatzverdichters (303) bedarfsabhängig nachverdichteten Ladeluft (F_{L}) ausgebildet ist, die im Spülstrang als Frischluft (F_{F}) oder als Frischluft/Abgas-Gemisch (F_{F}/F_{A}) vorliegt.

2. Brennkraftmaschine (1) nach Anspruch 1, wobei in dem Ladeluftstrang (II) stromab des Verdichters (202) vor der Entnahmestelle (II-E) ein erster Ladeluftkühler (LK1) angeordnet ist.

3. Brennkraftmaschine (1) nach Anspruch 2, wobei die Entnahmestelle (II-E) zwischen dem ersten Ladeluftkühler (LK1) und einer Drosselklappe (102) eines zu der mindestens einen Hauptbrennkammer (BK) führenden Saugrohrs angeordnet ist.

4. Brennkraftmaschine (1) nach Anspruch 1, wobei stromauf des Zusatzverdichters (303) im Spülstrang ein Rückschlagventil (301) oder ein Rückschlagventil (301) und ein Pufferbehälter (302) angeordnet ist/sind.

5. Brennkraftmaschine (1) nach Anspruch 4, wobei dem Verdichter (202) aus einem stromauf angeordneten Frischluftstrang (I) Frischluft (F_{F}) zuführbar ist, so dass über die Entnahmestelle (II-E) Frischluft (F_{F}) als verdichtete Ladeluft (F_{L}) entnehmbar und im Spülstrang mittels des Zusatzverdichters (303) bedarfsabhängig nachverdichtbar ist.

6. Verfahren zum Betreiben einer Brennkraftmaschine (1), die mindestens einen Zylinder (Z) umfasst, wobei der mindestens eine Zylinder (Z) eine Hauptbrennkammer (BK) zur Verbrennung eines Kraftstoff/Luft-Gemischs (K/F_{L}) oder eines Kraftstoff/Luft/Abgas-Gemischs (K/F_{F}/F_{A}) und eine mit der Hauptbrennkammer (BK) über mindestens einen Überströmkanal fluidseitig verbundene gespülte Vorkammer aufweist, und die mindestens einen Abgasturbolader (200) umfasst, der eine Turbine (201) zur Entspannung von den mindestens einen Zylinder (Z) verlassendem Abgas (F_{A}) und einen Verdichter (202) zur Verdichtung von dem mindestens einen Zylinder (Z) zuzuführender Frischluft (F_{F}) oder eines Frischluft/Abgas-Gemischs (F_{F}/F_{A}) als verdichtete Ladeluft (F_{L}) aufweist, wobei in einem Ladeluftstrang (II) stromab des Verdichters (202) eine Entnahmestelle (II-E) ausgebildet ist, von der ein zweiter Teil-Ladeluftstrang (II-2) als Spülstrang und ein erster Teil-Ladeluftstrang (II-1) abzweigen, wobei über den Spülstrang eine Ladeluftteilmenge (F_{L}-2) der im Verdichter (202) des Abgasturboladers (200) verdichteten Ladeluft (F_{L}) zur Spülung der mindestens einen Vorkammer entnommen wird, wobei in dem Spülstrang stromab eines Zusatzverdichters (303) eine Zuführstelle (II-2Z) einer Kraftstoffzuleitung (V) zur Zuführung von Kraftstoff (K) zu der mittels des Zusatzverdichters (303) bedarfsabhängig nachverdichteten Ladeluft (F_{L}) angeordnet ist, der den Ladedruck der verdichteten Ladeluft (F_{L}) bedarfsabhängig erhöht, so dass die mindestens eine Vorkammer mit der nachverdichteten Frischluft (F_{F}) oder dem nachverdichteten Frischluft/Abgas-Gemisch (F_{F}/F_{A}) gespült wird, da ein Frischluftstrang (I) stromauf des Verdichters (202) mit einem Abgasrückführungsstrang (IV) eines Abgasstrangs (III) verbunden ist, so dass der Frischluft (F_{F}) im Frischluftstrang (I) Abgas (F_{A}) zuführbar ist, wobei der verdichteten Ladeluft (F_{L}) oder dem Frischluft/Abgas-Gemisch (F_{F}/F_{A}) stromab des Zusatzverdichters (303) bedarfsabhängig Kraftstoff (K) zuführbar ist, so dass die mindestens eine Vorkammer auch mit einem nachverdichteten Kraftstoff/Frischluft-Gemisch (K/F_{F}) oder einem nachverdichteten Kraftstoff/Luft/Abgas-Gemisch (K/F_{F}/F_{A}) spülbar ist.

## Claims

1. Internal combustion engine (1), comprising at least one cylinder (Z), wherein the at least one cylinder (Z) has a main combustion chamber (BK) for the combustion of a fuel/air mixture (K/F_{L}) or a fuel/air/exhaust gas mixture (K/F_{F}/F_{A}), and a flushed prechamber, which is connected in terms of fluid to the main combustion chamber (BK) via at least one overflow channel, and at least one exhaust turbocharger (200), which has a turbine (201) for expanding exhaust gas (F_{A}) leaving the at least one cylinder (Z), and a compressor (202) for compressing fresh air (F_{F}) or a fresh air/exhaust gas mixture (F_{F}/F_{A}) being supplied to the at least one cylinder (Z) as compressed charge air (F_{L}), wherein in a charge-air tract (II) downstream of the compressor (202) an extraction point (II-E) is formed, from which branch off a second partial charge-air tract (II-2), as a flushing tract, and a first partial charge-air tract (II-1), wherein a charge-air partial quantity (F_{L}-2) of the compressed charge air (F_{L}) for flushing the at least one prechamber can be extracted via the flushing tract, wherein an auxiliary compressor (303) is arranged in the flushing tract which increases the charging pressure of the compressed charge air (F_{L}) as required, wherein the fresh air/exhaust gas mixture (F_{F}/F_{A}) can be supplied to the compressor (202) from a fresh-air tract (I) arranged upstream of the compressor (202), since the fresh-air tract (I) is connected upstream of the compressor (202) to an exhaust gas return tract (IV) of an exhaust tract (III) such that exhaust gas (F_{A}) can be supplied to the fresh air (F_{F}) in the fresh-air tract (I) so that via the extraction point (II-E) a fresh-air/exhaust gas mixture (F_{F}/F_{A}) can also be extracted as compressed charge air (F_{L}) and can be recompressed in the flushing tract by means of the auxiliary compressor (303) as required, wherein a supply point (II-2Z) of a fuel feed line (V) for supplying fuel (K) to the charge air (F_{L}), which is recompressed as required by means of the auxiliary compressor (303), is formed in the flushing tract downstream of the auxiliary compressor (303), said charge air being present in the flushing tract as fresh air (F_{F}) or as a fresh air/exhaust gas mixture (F_{F}/F_{A}).

2. Internal combustion engine (1) according to Claim 1, wherein in the charge-air tract (II) downstream of the compressor (202) a first charge-air cooler (LK1) is arranged upstream of the extraction point (II-E).

3. Internal combustion engine (1) according to Claim 2, wherein the extraction point (II-E) is arranged between the first charge-air cooler (LK1) and a throttle valve (102) of a suction pipe leading to the at least one main combustion chamber (BK).

4. Internal combustion engine (1) according to Claim 1, wherein upstream of the auxiliary compressor (303) in the flushing tract there is/are arranged a check valve (301) or a check valve (301) and a buffer container (302).

5. Internal combustion engine (1) according to Claim 4, wherein fresh air (F_{F}) can be supplied to the compressor (202) from a fresh-air tract (I) arranged upstream so that fresh air (F_{F}) can be extracted as compressed charge air (F_{L}) via the extraction point (II-E) and recompressed as required in the flushing tract by means of the auxiliary compressor (303).

6. Method for operating an internal combustion engine (1) which comprises at least one cylinder (Z), wherein the at least one cylinder (Z) has a main combustion chamber (BK) for the combustion of a fuel/air mixture (K/F_{L}) or a fuel/air/exhaust gas mixture (K/F_{F}/F_{A}), and a flushed prechamber, which is connected in terms of fluid to the main combustion chamber (BK) via at least one overflow channel, and which comprises at least one exhaust turbocharger (200), which has a turbine (201) for expanding exhaust gas (F_{A}) leaving the at least one cylinder (Z), and a compressor (202) for compressing fresh air (F_{F}) or a fresh air/exhaust gas mixture (F_{F}/F_{A}) being supplied to the at least one cylinder (Z) as compressed charge air (F_{L}), wherein in a charge-air tract (II) downstream of the compressor (202) an extraction point (II-E) is formed, from which branch off a second partial charge-air tract (II-2), as a flushing tract, and a first partial charge-air tract (II-1), wherein a charge-air partial quantity (F_{L}-2) of the charge air (F_{L}) compressed in the compressor (202) of the exhaust turbocharger (200) for flushing the at least one prechamber is extracted via the flushing tract, wherein in the flushing tract downstream of an auxiliary compressor (303) there is formed a supply point (II-2Z) of a fuel feed line (V) for supplying fuel (K) to the charge air (F_{L}), which is recompressed as required by means of the auxiliary compressor (303), which increases the charge pressure of the compressed charge air (F_{L}) as required so that the at least one prechamber is flushed with the recompressed fresh air (F_{F}) or the recompressed fresh air/exhaust mixture (F_{F}/F_{A}) since a fresh-air tract (I) is connected upstream of the compressor (202) to an exhaust return tract (IV) of an exhaust tract (III) such that exhaust gas (F_{A}) can be supplied to the fresh air (F_{F}) in the fresh-air tract (I), wherein fuel (K) can be supplied as required to the compressed charge air (F_{L}) or to the fresh-air/exhaust gas mixture (F_{F}/F_{A}) downstream of the auxiliary compressor (303) so that the at least one prechamber can also be flushed with a recompressed fuel/fresh-air mixture (K/F_{F}) or a recompressed fuel/air/exhaust mixture (K/F_{F}/F_{A}).

## Revendications

1. Moteur à combustion interne (1), comprenant au moins un cylindre (Z), ledit au moins un cylindre (Z) présentant une chambre de combustion principale (BK) pour la combustion d'un mélange carburant/air (K/F_{L}) ou d'un mélange carburant/air/gaz d'échappement (K/F_{F}/F_{A}) et une préchambre purgée reliée côté fluide à la chambre de combustion principale (BK) par au moins un canal de trop-plein, et au moins un turbocompresseur (200) à gaz d'échappement, qui présente une turbine (201) pour la détente des gaz d'échappement (F_{A}) quittant ledit au moins un cylindre (Z) et un compresseur (202) pour la compression de l'air frais (F_{F}) ou d'un mélange air frais/gaz d'échappement (F_{F}/F_{A}) à amener audit au moins un cylindre (Z) en tant qu'air de suralimentation (F_{L}) comprimé, un point de prélèvement (II-E) étant formé dans une ligne d'air de suralimentation (II) en aval du compresseur (202), duquel partent une deuxième ligne d'air de suralimentation partielle (II-2) en tant que ligne de purgeage et une première ligne (II-1) d'air de suralimentation partielle, une quantité partielle (F_{L}-2) d'air de suralimentation de l'air de suralimentation comprimé (F_{L}) étant apte à être prélevée par l'intermédiaire de la ligne de purgeage pour la purge de ladite au moins une préchambre, un compresseur supplémentaire (303) étant agencé dans la ligne de purgeage, lequel augmente la pression de suralimentation de l'air de suralimentation (F_{L}) comprimé en fonction des besoins, le mélange air frais/gaz d'échappement (F_{F}/F_{A}) étant apte à être acheminé au compresseur (202) à partir d'une ligne (I) d'air frais agencée en amont du compresseur (202), du fait que la ligne (I) d'air frais est reliée en amont du compresseur (202) à une ligne (IV) de recirculation des gaz d'échappement d'une ligne (III) de gaz d'échappement, de sorte que les gaz d'échappement (F_{A}) soient aptes à être amenés à l'air frais (F_{F}) dans la ligne (I) d'air frais, de sorte qu'un mélange air frais/gaz d'échappement (F_{F}/F_{A}) est apte à également être prélevé en tant qu'air de suralimentation (F_{L}) comprimé par l'intermédiaire du point de prélèvement (II-E) et est apte à être recomprimé dans la ligne de purgeage au moyen du compresseur supplémentaire (303) en fonction des besoins, un point d'alimentation (II-2Z) d'une conduite (V) d'alimentation en carburant étant formé dans la ligne de purgeage en aval du compresseur supplémentaire (303) pour l'alimentation en carburant (K) de l'air de suralimentation (F_{L}) recomprimé en fonction des besoins au moyen du compresseur supplémentaire (303), lequel se présente dans la ligne de purgeage sous forme d'air frais (F_{F}) ou de mélange air frais/gaz d'échappement (F_{F}/F_{A}).

2. Moteur à combustion interne (1) selon la revendication 1, dans lequel un premier refroidisseur d'air de suralimentation (LK1) est agencé dans la ligne d'air de suralimentation (II) en aval du compresseur (202) avant le point de prélèvement (II-E).

3. Moteur à combustion interne (1) selon la revendication 2, dans lequel le point de prélèvement (II-E) est agencé entre le premier refroidisseur d'air de suralimentation (LK1) et un clapet d'étranglement (102) d'un tuyau d'admission menant à ladite au moins une chambre de combustion principale (BK).

4. Moteur à combustion interne (1) selon la revendication 1, dans lequel un clapet anti-retour (301) ou un clapet anti-retour (301) et un réservoir tampon (302) est/sont agencé(s) en amont du compresseur supplémentaire (303) dans la ligne de purgeage.

5. Moteur à combustion interne (1) selon la revendication 4, dans lequel de l'air frais (F_{F}) est apte à être amené au compresseur (202) à partir d'une ligne (I) d'air frais agencée en amont, de sorte que de l'air frais (F_{F}) soit apte, par le point de prélèvement (II-E), à être prélevé sous forme d'air de suralimentation (F_{L}) comprimé et soit apte, au moyen du compresseur supplémentaire (303), à être recomprimé dans la ligne de purgeage selon les besoins.

6. Procédé pour faire fonctionner un moteur à combustion interne (1), qui comprend au moins un cylindre (Z), ledit au moins un cylindre (Z) présentant une chambre de combustion principale (BK) pour la combustion d'un mélange carburant/air (K/F_{L}) ou d'un mélange carburant/air/gaz d'échappement (K/F_{F}/F_{A}) et une préchambre purgée reliée côté fluide à la chambre de combustion principale (BK) par au moins un canal de trop-plein, et qui comprend au moins un turbocompresseur (200) à gaz d'échappement, qui présente une turbine (201) pour la détente des gaz d'échappement (F_{A}) quittant ledit au moins un cylindre (Z) et un compresseur (202) pour la compression de l'air frais (F_{F}) ou d'un mélange air frais/gaz d'échappement (F_{F}/F_{A}) à amener audit au moins un cylindre (Z) en tant qu'air de suralimentation (F_{L}) comprimé, un point de prélèvement (II-E) étant formé dans une ligne d'air de suralimentation (II) en aval du compresseur (202), duquel partent une deuxième ligne d'air de suralimentation partielle (II-2) en tant que ligne de purgeage et une première ligne (II-1) d'air de suralimentation partielle, une quantité partielle (F_{L}-2) d'air de suralimentation de l'air de suralimentation (F_{L}) comprimé dans le compresseur (202) du turbocompresseur (200) à gaz d'échappement étant prélevée par l'intermédiaire de la ligne de purgeage pour le purgeage d'au moins une préchambre, un point d'alimentation (II-2Z) d'une conduite (V) d'alimentation en carburant étant agencé dans la ligne de purgeage en aval d'un compresseur supplémentaire (303) pour l'alimentation en carburant (K) de l'air de suralimentation (F_{L}) recomprimé selon les besoins au moyen du compresseur supplémentaire (303), ce qui augmente la pression de suralimentation de l'air de suralimentation (F_{L}) comprimé selon les besoins, de sorte que ladite au moins une préchambre soit purgée avec l'air frais recomprimé (F_{F}) ou avec le mélange air frais/gaz d'échappement recomprimé (F_{F}/F_{A}), du fait qu'une ligne (I) d'air frais est raccordée, en amont du compresseur (202), à une ligne de recirculation des gaz d'échappement (IV) d'une ligne (III) de gaz d'échappement, de sorte que les gaz d'échappement (F_{A}) sont aptes à être amenés à l'air frais (F_{F}) dans la ligne (I) d'air frais, du carburant (K) étant apte à être amené à l'air de suralimentation (F_{L}) comprimé ou au mélange air frais/gaz d'échappement (F_{F}/F_{A}) en aval du compresseur supplémentaire (303) selon les besoins, de sorte que ladite au moins une préchambre soit apte à également être purgée avec un mélange carburant/air frais (K/F_{F}) recomprimé ou un mélange carburant/air/gaz d'échappement (K/F_{F}/F_{A}) recomprimé.
